# EUROPÄISCHE PATENTSCHRIFT

(11) **EP 3 654 353 B1**
(45) Veröffentlichungstag und Bekanntmachung des Hinweises auf die Patenterteilung: **13.12.2023**
(21) Anmeldenummer: 19203724.0
(22) Anmeldetag: 17.10.2019
(51) Int. Cl.: H01F 7/126, F16K 27/04, F16K 31/06, H01F 7/127, H01F 7/128, H01F 7/06

(54) **ELEKTROMAGNETISCH BETÄTIGBARES HYDRAULISCHES EINBAUVENTIL**
ELECTROMAGNETICALLY ACTUATED HYDRAULIC INSTALLED VALVE
SOUPAPE INTÉGRÉE HYDRAULIQUE À COMMANDE ÉLECTROMAGNÉTIQUE

(30) Priorität: 14.11.2018 DE 102018219428
(43) Veröffentlichungstag der Anmeldung: 20.05.2020
(73) Patentinhaber: Robert Bosch GmbH, 70442 Stuttgart (DE)
(72) Erfinder: Foerner, Markus, 63879 Weibersbrunn (DE)

(56) Entgegenhaltungen:
- EP-A2- 1 073 070
- AT-B- 409 890
- CN-U- 203 880 212
- DE-A1- 10 214 084
- DE-A1- 10 359 364
- DE-A1-102006 042 214
- DE-A1-102013 218 854
- DE-A1-102014 210 743

## Beschreibung

Die Erfindung betrifft ein elektromagnetisch betätigbares hydraulisches Einbauventil mit einer ein Ventilgehäuse bildenden Einbaubuchse, die in eine Einbaubohrung eines Ventilblocks einbaubar ist, und mit einem mit der Einbaubuchse eine Einheit bildenden Elektromagneten, der aufweist ein Magnetgehäuse mit einem Spulengehäuse und mit einem Befestigungsflansch, an dem mindestens ein Befestigungsauge ausgebildet ist, ein Polrohr und einen in einen Freiraum zwischen dem Polrohr und dem Spulengehäuse eingesetzten Spulenkörper, der eine Wicklung und eine sich radial zwischen dem Polrohr und dem Magnetgehäuse erstreckende Polscheibe umfasst, wobei die Wicklung und die Polscheibe unter zusätzlicher Ausbildung eines außerhalb des Magnetgehäuses liegenden Steckteils mit elektrischen Anschlusselementen zusammen mit Kunststoff umspritzt sind.

Aus der DE 10 2014 210 743 A1 ist ein elektromagnetisch betätigbares hydraulisches Einbauventil ähnlich der oben bezeichneten Art bekannt. Bisher ist es, insbesondere wenn das Steckteil senkrecht zur axialen Richtung des Elektromagneten ausgerichtet ist, bei einem solchen Einbauventil notwendig, dass während der Montage das Steckteil mit den elektrischen Anschlüssen auf die vom Kunden gewünschte Lage bezüglich des oder der Befestigungsaugen des Befestigungsflansches ausgerichtet wird oder dass der Kunde seine Schnittstellen an die vorgegebene Lage des Steckteils bezüglich der Befestigungsaugen anpasst.

Aus der DE 197 29 935 A1 ist elektromagnetisch betätigbares hydraulisches Einbauventil bekannt, bei dem das Magnetgehäuse einstückig ein radial abstehendes Befestigungsauge zur Befestigung des Einbauventils an einem Block mittels einer Schraube aufweist. Die zwei axial voneinander beabstandete Radialbohrungen aufweisende Ventilbuchse ist mit einem Polkern durch eine Bördelung fest verbunden. Beim Zusammenbau des Einbauventils wird darauf geachtet, dass einerseits ein Steckteil mit elektrischen Anschlüssen des Elektromagneten und andererseits die Ventilbuchse vorbestimmte Positionen bezüglich des Befestigungsauges einnehmen.

Aus der DE 202 18 782 U1 ist eine elektromagnetische Stellvorrichtung, die als Ventilaktuator fungieren kann und deren Spulenkörper einen endseitig seitwärts aus dem Gehäuse herausgeführten Steckteil aufweist, der es ermöglicht, das den Spulenkörper relativ zum Magnetgehäuse in Umfangsrichtung auszurichten, so dass offenbar erst nach dem Einsetzen des Spulenkörpers in das Magnetgehäuse zum Verbinden des Spulenkörpers mit dem Magnetgehäuse einzubringende Sicken mit zugehörigen Ausnehmungen im Spulenkörper fluchten. Warum diese Ausrichtung notwendig ist, erschließt sich nicht näher, da das Magnetgehäuse völlig indifferent gegen Verdrehen ist und die Sicken an jeder Stelle auf dem Umfang des Magnetgehäuses eingebracht werden können.

EP 1073070 A2 offenbart eine elektromagnetische Stellvorrichtung, bei der der Spulenkörper mittels einer ringförmige Nut am Gehäuse fixiert ist.

AT 409890 B offenbart ein Druckrohr, das im Reibschluss an einem Befestigungsflansch angebracht ist und zusammen mit einem darauf aufgeschobenen Spulenkörper mit Stecker rotiert werden kann, um den Stecker nach Einbau auszurichten.

Der Erfindung liegt die Aufgabe zugrunde, ein elektromagnetisch betätigbares hydraulisches Einbauventil mit den eingangs angeführten Merkmalen derart weiterzuentwickeln, dass eine notwendige Ausrichtung der Position des Steckteils mit den elektrischen Anschlusselementen auf einfache Weise vor Ort möglich und mit wenig Aufwand verbunden ist.

Diese Aufgabe wird durch das elektromagnetisch betätigbare hydraulische Einbauventil gemäß Anspruch 1 gelöst, insbesondere dadurch dass bei einem Einbauventil mit den eingangs gennannten Merkmalen der Befestigungsflansch durch einen Reibschluss am Polrohr gehalten ist, dass der Spulenkörper auf das Polrohr aufgepresst ist und dass nach vollständigem Zusammenbau aller Teile einerseits der Spulenkörper zusammen mit dem Polrohr und andererseits der Befestigungsflansch relativ zueinander verdrehbar sind. Durch den Presssitz zwischen dem Spulenkörper und dem Polrohr ist sichergestellt, dass der Spulenkörper nicht in axialer Richtung vom Polrohr abrutscht und eine feste Winkellage bezüglich des Polrohrs einnimmt. Durch den unmittelbaren oder mittelbaren Reibschluss zwischen dem Befestigungsflansch und dem Polrohr ist sichergestellt, dass nach einer Ausrichtung der Position des Spulenkörpers mitsamt dem Polrohr relativ zum Befestigungsflansch die relative Lage zueinander beibehalten wird. Der Reibschluss zwischen dem Befestigungsflansch und dem Polrohr und der Presssitz zwischen der Polscheibe und dem Polrohr sind dabei so gestaltet, dass das für die Verdrehung von Polrohr und Befestigungsflansch relativ zueinander notwendige Drehmoment über den Presssitz zwischen der Polscheibe und dem Polrohr sicher vom Spulenkörper auf das Polrohr übertragen werden kann. Dabei ist der Reibschluss, mit dem der Befestigungsflansch am Polrohr gehalten ist, so gestaltet, dass durch ihn eine einmal eingestellte Winkellage sicher beibehalten wird, er aber durch Aufbringen eines Drehmoments noch durch Handkraft überwunden werden kann. Somit kann das Steckteil noch nach dem Zusammenbau des Einbauventils ausgerichtet werden, ohne dass verlierbare Teile vorhanden wären oder sich die Ausrichtung wieder verändern könnte. Ein Kunde kann die Position des Steckteils relativ zum Magnetgehäuse wie für seine Applikation notwendig einstellen.

Ein erfindungsgemäßes elektromagnetisch betätigbares hydraulisches Einbauventil kann in vorteilhafter Weise weiter ausgebildet werden.

Um den Spulenkörper leicht gegenüber dem Magnetgehäuse verdrehen zu können, ist es erfindungsgemäß, dass zwischen der Polscheibe und dem Spulengehäuse eine Spielpassung vorhanden ist derart, dass der Außendurchmesser der Polscheibe kleiner als der oder höchstens gleich dem Innendurchmesser des Spulengehäuses ist. Vorzugsweise liegt das minimale Spiel bei null und das maximale Spiel bei etwa ein Zehntel Millimeter, zum Beispiel bei 0,110 mm. Dann kann das Spulengehäuse in nicht erfindungsgemäßen Ausführungsformen zusammen mit dem Befestigungsflansch beim Verdrehen des Spulenkörpers festgehalten werden oder das Spulengehäuse und der Befestigungsflansch können einstückig ausgebildet sein. Erfindungsgemäß sind die beiden als ursprünglich zwei Teile fest miteinander verbunden. Im letzteren Fall kann der Befestigungsflansch auch über einen bloßen Sitz des Spulengehäuses am Polrohr gehalten sein.

Zwischen dem Spulenkörper und dem Spulengehäuse befindet sich vorteilhafterweise ein Dichtring. Dieser dichtet den Ringspalt zwischen dem Spulenkörper und dem Spulengehäuse gegen den Eintritt von Wasser ab. Zugleich bewirkt er einen Reibschluss zwischen dem Spulenkörper und dem Spulengehäuse und damit mittelbar auch für einen Reibschluss zwischen dem Spulenkörper und dem Befestigungsflansch. Nach einer Positionierung des Steckteils zum Befestigungsflansch sorgt also der Dichtring allein dafür oder trägt zumindest dazu bei, dass sich die Position des Steckteils relativ zum Befestigungsflansch nicht wieder verändert.

Wenn das Spulengehäuse und der Befestigungsflansch als ursprünglich zwei Teile fest miteinander verbunden sind und jeweils einen kreisrunden zentralen Durchbruch haben, durch den das Polrohr hindurchtritt, und wenn die beiden zentralen Durchbrüche den gleichen Durchmesser haben, so lassen sich die beiden Durchbrüche nach der Verbindung der beiden Teile miteinander gemeinsam auf einen für einen engen Sitz auf dem Polrohr geeigneten Durchmesser bringen. Sie sind dann mit ihren zentralen Durchbrüchen auf einen kreiszylindrischen Abschnitt des Polrohrs aufgeschoben. Die Passung zwischen dem Spulengehäuse und dem Befestigungsflansch einerseits und dem Polkern andererseits ist vorzugsweise eine Spielpassung, gemäß der der maximale Durchmesser eines Abschnitts des Polkerns, auf den Spulengehäuse und Befestigungsflansch aufgeschoben sind, höchstens gleich dem Durchmesser der kreisrunden zentralen Durchbrüche ist. Vorzugsweise liegt das minimale Spiel bei null und das maximale Spiel bei etwa ein Zehntel Millimeter, zum Beispiel bei 0,097 mm.

Durch den Sitz der Einheit aus Spulengehäuse und Befestigungsflansch auf dem Polrohr wird das Spulengehäuse derart zum Polrohr ausgerichtet ist, dass zwischen ihm und der auf das Polrohr aufgepressten Polscheibe rundum ein Spiel besteht. Aufgrund der genauen Ausrichtung kann das Spiel klein sein, was gut für den magnetischen Rückschluss ist.

Weist das Polrohr zweistückig einen Polkern, an dem die Einbaubuchse befestigt ist, und ein mit dem Polkern verbundenes rohr-oder becherförmiges Teil auf, auf das die Polscheibe aufgepresst ist, so sind die Einheit aus Spulengehäuse und Befestigungsflansch und das rohr- oder becherförmige Teil des Polrohrs vorteilhafterweise derart durch den Polkern zentriert, dass zwischen der Polscheibe und dem Spulengehäuse rundum ein Spiel besteht.

Sind das Spulengehäuse und der Befestigungsflansch zunächst zwei separat handhabbare Teile, so werden sie vorteilhafterweise stoffschlüssig, zum Beispiel durch mehrere Schweißpunkte, fest miteinander verbunden.

Zusätzlich oder auch nur allein können das Spulengehäuse und der Befestigungsflansch durch umlaufende ringförmige Stoffschlussnaht mit einander verbunden sein. Dies bewirkt außer stoffschlüssigen Verbindung auch eine Abdichtung, so dass entlang der Fügeflächen der beiden Teile keine die Funktion des Elektromagneten beeinträchtigende Stoffe, zum Beispiel Wasser, in das Magnetgehäuse eindringen können.

Die ringförmige Stoffschlussnaht ist bevorzugt eine Lötnaht.

Eine Drehfixierung des Polrohrs und damit des Spulenkörpers kann beim Einbau in einen Ventilblock und bei der Befestigung des Einbauventils dadurch erhalten werden, dass der Befestigungsflansch zumindest zwei Befestigungsaugen und eine vom Spulengehäuse abgewandte Anlagefläche hat, die im Bereich der Befestigungsaugen gegenüber einem zentralen Bereich insbesondere mit dem Abstand zur Mittelachse des Magnetgehäuses zunehmend zurückgesetzt ist. Damit ist sichergestellt, dass beim Anziehen von durch die Befestigungsaugen gesteckten Schrauben der Befestigungsflansch mit seinem zentralen Bereich zur Anlage an den Ventilblock gelangt.

Ein Ausführungsbeispiel eines erfindungsgemäßen elektromagnetisch betätigbaren hydraulischen Einbauventils ist in den Zeichnungen dargestellt. Anhand dieser Zeichnungen wird die Erfindung nun näher erläutert.

Es zeigen
- Figur 1: das Ausführungsbeispiel im Bereich des Elektromagneten teilweise in einem Längsschnitt und teilweise in einer Seitenansicht und im Bereich der Ventilbuchse in Seitenansicht,
- Figur 2: in einem vergrößerten Maßstab einen Ausschnitt aus Figur 1,
- Figur 3: eine Ansicht auf das Ausführungsbeispiel in Achsrichtung und
- Figur 4: eine Einbaubohrung für das Einbauventil gemäß den Figuren 1 bis 3.

Das gezeigte elektromagnetisch betätigbare hydraulische Einbauventil ist ein proportionalverstellbares Druckregelventil und weist eine Ventilbuchse 10 auf, an der durch zwei voneinander axial beabstandete Dichtbunde 11 und 12 , von denen jeder mit einer Ringnut versehen ist, in der sich ein Dichtring 13 beziehungsweise ein Dichtring 14 befindet, drei um die Ventilbuchse herumlaufende hydraulische Anschlüsse, nämlich ein Druckanschluss P, ein Regelanschluss A und ein Tankanschluss T, voneinander getrennt sind. Die hydraulischen Anschlüsse sind über Radialbohrungen, von denen nur die Radialbohrungen 15 des Tankanschlusses T sichtbar sind, mit einer im Innern der Ventilbuchse 10 axial verlaufenden Ventilbohrung fluidisch verbunden, in der ein Regelschieber in nicht näher dargestellter allgemein bekannter Weise die fluidischen Verbindungen zwischen den hydraulischen Anschlüssen steuert. Die Radialbohrungen für den Druckanschluss P und für den Regelanschluss A sind ringförmige Siebfilter 16 und 17 verdeckt.

Der Proportionalelektromagnet 20, mit dem eine von der Höhe des durch die Magnetspule fließenden elektrischen Stromes abhängige Kraft auf den Regelschieber ausgeübt werden kann, weist als Baugruppen ein Polrohr 21, einen Spulenkörper 22 und ein Magnetgehäuse 23 auf.

Das Polrohr 21 ist zweiteilig aus einem Polkern 24 und einem büchsenförmigen Teil 25, das im folgenden Führungsbüchse genannt wird, aufgebaut, in der ein nicht näher dargestellter Magnetanker axial geführt ist. Die Ventilbuchse ist durch eine Bördelung mechanisch fest mit dem Polkern 24 verbunden. Die Führungsbüchse 25 des Polrohrs 21 hat an Ihrem offenen Ende innen eine Eindrehung 26, mit der sie über einen Dichtbund 27 des Polrohrs geschoben ist. Der Dichtbund 27 ist mit einer umlaufenden Nut versehen, in die ein Dichtring 28 eingesetzt ist. Somit ist der durch den Polkern 24 hindurch mit der Ventilbohrung in der Ventilbuchse fluidisch verbundene und deshalb mit Öl gefüllte Raum innerhalb der Führungsbüchse 25, in dem sich der Magnetanker befindet, zur Außenseite des Polrohrs 21 hin abgedichtet.

Durch eine enge Passung zwischen dem Dichtbund 27 des Polkerns 24 und der Führungsbüchse 25 ist dieser zum Polkern zentriert. An dem über den Dichtbund 27 überstehenden Abschnitt ist die Führungsbüchse 25 stellenweise in eine Eindrehung des Polkerns 24 eingedrückt und somit einerseits durch Anlage der Stufe am Ende der Eindrehung 26 an dem Dichtbund 27 und durch Anlage der eingedrückten Sicken 29 axial fest am Polkern 24 gehalten.

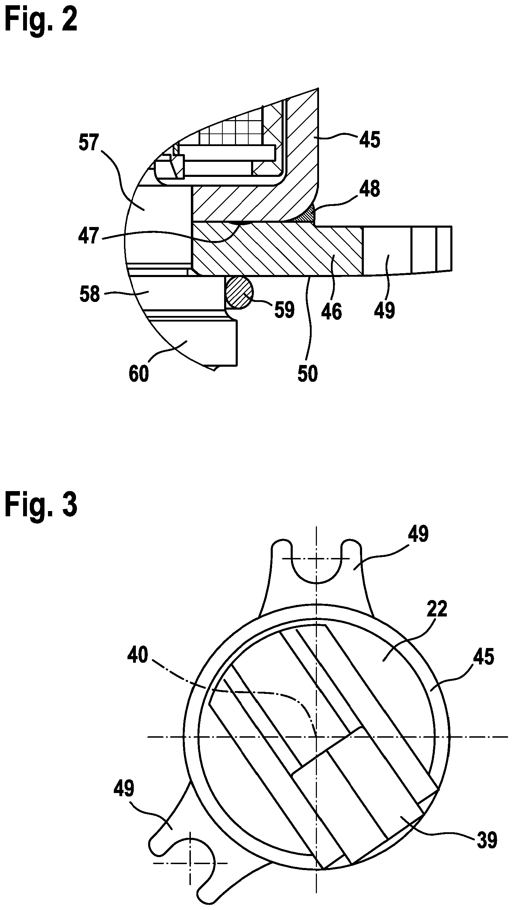

Der Spulenkörper 22 umfasst eine Wicklung 35, die auf einen Wicklungsträger 36 aus Kunststoff aufgewickelt ist, eine Polscheibe 37 und weiteres Kunststoffmaterial, mit dem die Wicklung 35 und die Polscheibe 37 umspritzt sind und an dem als Steckteil mit elektrischen Steckkontakten 38 ein Stecker 39 ausgebildet ist. Dieser ist, wie deutlich aus Figur 3 hervorgeht, senkrecht zur Mittelachse 40 des Einbauventils ausgerichtet, ein Gegenstecker ist also in eine Richtung senkrecht zur Mittelachse 40 mit dem Stecker 39 zusammenzufügen. In der Polscheibe 37 befinden sich zwei in den Figuren nicht sichtbare Durchbrüche, durch die die beiden Enden der Wicklung 35 zu den beiden Steckkontakten 38 geführt sind und die beim Umspritzen von Wicklung und Polscheibe mit Kunststoffmaterial gefüllt worden sind. Somit wird durch das Umspritzen der Wicklung und der Polscheibe der Spulenkörper als eine Einheit gebildet. Auf der der Wicklung 35 abgewandten Seite der Polscheibe 37 ist in den Kunststoff eine Ringnut 41 eingebracht, in der sich ein Dichtring 42 befindet, der mit einer gewissen Spannung zwischen dem Spulenkörper 22 und dem Spulengehäuse 45 anliegt und damit einen Reibschluss zwischen Spulengehäuse und damit mittelbar auch zwischen dem Befestigungsflansch und dem Spulenkörper und so mittelbar auch mit dem Polrohr bewirkt. Der Dichtring 42 dichtet den Spalt zwischen dem Magnetgehäuse 23 und dem Spulenkörper 22 gegen den Eintritt von Wasser ab.

Das Magnetgehäuse 23 besteht aus zwei Teilen, nämlich einem tiefgezogenen Spulengehäuse 45 und einem Befestigungsflansch 46, der sich außen am Boden des Spulengehäuses 45 befindet und durch mehrere Schweißpunkte 47 stoffschlüssig fest mit dem Spulengehäuse verbunden ist. Das Spulengehäuse und der Befestigungsflansch sind zusätzlich durch eine Lötnaht 48 stoffschlüssig miteinander verbunden, die am Außenrand des Bodens des Spulengehäuses 45 umläuft und die zugleich das Eindringen von Fremdstoffen, insbesondere das Eindringen von Wasser an den Fügeflächen von Spulengehäuse und Befestigungsflansch entlang in das Spulengehäuse verhindert. Der Befestigungsflansch 46 ragt mit zwei radial offenen Befestigungsaugen 49 radial über den Umfang des Spulengehäuses 45 hinaus. Zur Befestigung des Einbauventils an einem Ventilblock wird durch jedes der beiden Befestigungsaugen 49 hindurch eine Schraube in eine entsprechende Gewindebohrung des Ventilblocks eingeschraubt. Wie aus Figur 3 ersichtlich, liegen sich die beiden Befestigungsaugen nicht diametral gegenüber, sondern schließen einen Winkel von 145 Grad miteinander ein.

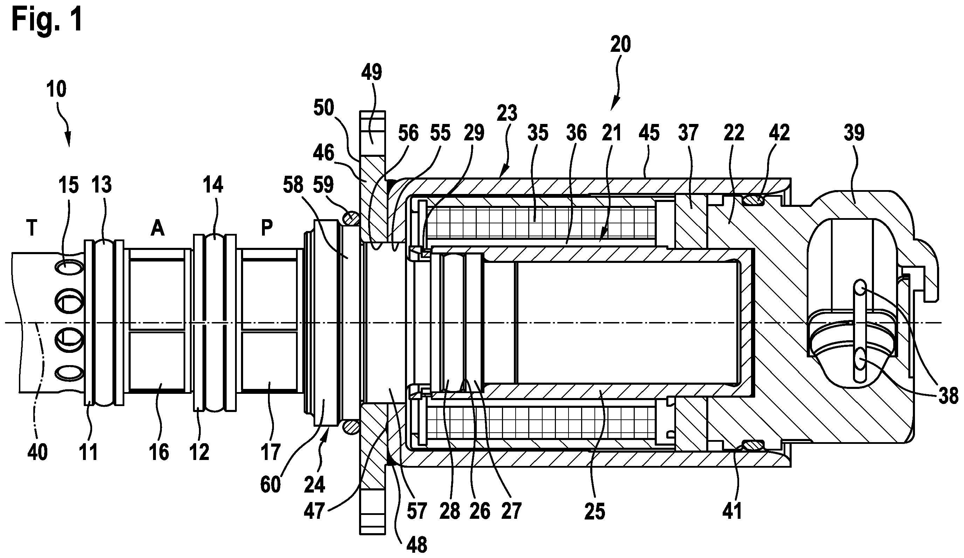

Wie aus der ein Detail aus Figur 1 in einem vergrößerten Maßstab zeigenden Figur 3 hervorgeht, ist die dem Spulengehäuse abgewandte Anlagefläche 50 des Befestigungsflansches 46 nicht völlig eben. In einem entspannten Zustand des Befestigungsflansches ist diese Anlagefläche 50 vielmehr im Bereich der Befestigungsaugen 49 in einem in einer konvexen stetigen Weise zunehmenden Maß gegenüber einem zentralen Bereich, in dem die Anlagefläche eben ist, zurückgesetzt. Zur Verdeutlichung ist diese Zurücksetzung in Figur 3 übertrieben groß dargestellt.

Im Befestigungsflansch 46 und im Boden des Spulengehäuses 45 befinden sich zentrale kreisrunde Öffnungen 55 und 56, die nach der Befestigung von Befestigungsflansch und Spulengehäuse aneinander gemeinsam bearbeitet und auf Maß gebracht werden. Mit diesen zentralen Öffnungen sind der Befestigungsflansch 46 und das Spulengehäuse 45 über einen kreiszylindrischen Abschnitt 57 des Polkerns 24 bis zur axialen Anlage an einen weiteren kreiszylindrischen Abschnitt 58 mit einem gegenüber dem Abschnitt 57 einen größeren Durchmesser geschoben. Die Passung zwischen den Öffnungen 55 und 56 und dem Abschnitt 57 ist dabei eine enge Spielpassung, die zu einem schwachen Reibschluss zwischen den Teilen führt. Dieser reicht aus, um das Magnetgehäuse bei üblicher Handhabung des Einbauventils sicher am Polkern 24 zu halten. Auf den Abschnitt 58 des Polkerns 24 ist ein Dichtring 59 montiert.

Durch den Abschnitt 57, der sich ebenso wie der Dichtbund 27 am Polkern 24 befindet und deshalb mit dem Dichtbund in einer Aufspannung des Polkerns auf Maß gebracht wird, ist wie die Führungsbüchse auch das Spulengehäuse 45 zum Polkern 24 zentriert.

Vor dem Abschnitt 58 hat der Polkern 24 einen weiteren kreiszylindrischen Abschnitt 60 mit einem gegenüber dem Durchmesser des Abschnitts 58 größeren Durchmesser.

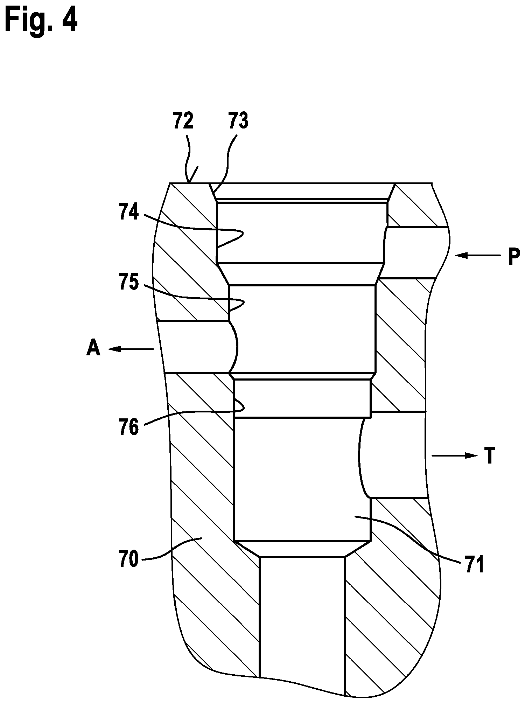

Die in einem Ventilblock 70 vorgesehene Einbaubohrung 71 gemäß Figur 4 weist zu unmittelbar an der Montagefläche 72 des Ventilblocks einen Konus 73 sowie drei kreiszylindrische Abschnitte 74, 75 und 76 unterschiedlicher Durchmesser auf, wobei der innerste Abschnitt 76 den kleinsten Durchmesser, der äußerste Abschnitt 74 den größten Durchmesser und der mittlere Abschnitt 75 einen zwischen dem kleinsten Durchmesser und dem größten Durchmesser liegenden Durchmesser haben. Die Abschnitte 74, 75 und 76 gehen jeweils in einem Konus ineinander über. Der Durchmesser des innersten Abschnitts 76 ist auf den Durchmesser des Dichtbunds 11, der Durchmesser des mittleren Abschnitts 75 ist auf den Durchmesser des Dichtbunds 12 an der Ventilbuchse 10 und der Durchmesser des äußersten Abschnitts 74 ist auf den Durchmesser des Abschnitts 60 des Polkerns 24 gemäß einer Spielpassung mit geringem Spiel abgestimmt.

Beim Zusammenbau des Einbauventils wird das Magnetgehäuse 23 bestehend aus dem Spulengehäuse 46 und aus dem Befestigungsflansch 47 auf das vormontierte Polrohr 21, nämlich auf den kreiszylindrischen Abschnitt 57 des Polkerns 24 aufgeschoben. Durch die enge Spielpassung mit einem minimalen Durchmesserunterschied von 0 und einem maximalen Durchmesserunterschied von 0,097 mm zwischen dem kreiszylindrischen Abschnitt 57 und dem Magnetgehäuse 23 wird dieses am Polkern und damit am Polrohr gehalten. Anschließend wird der Spulenkörper 22 in den Freiraum zwischen dem Polrohr 21 und dem Spulengehäuse 45 eingeschoben. Die Passung zwischen der Führungsbüchse 25 und der Polscheibe 37 ist eine solche Presspassung, dass nach dem Einschieben ein fester Presssitz zwischen der Führungsbuchse und der Polscheibe besteht. Die Passung zwischen der Polscheibe 37 und dem Spulengehäuse 46 dagegen ist eine Spielpassung mit einem geringen Spiel von zum Beispiel maximal 0,110 mm. Dieses geringe Spiel ist möglich aufgrund der Ausrichtung sowohl der Führungsbüchse 25 als auch des Magnetgehäuses 23 an in derselben Aufspannung bearbeiteten Abschnitten des Polkerns 24. Beim Einschieben des Spulenkörpers kommt der Dichtring 42 mit einer gewissen Einspannung zur Anlage an der Innenseite des Spulengehäuses 45 und stellt einen Reibschluss zwischen dem Spulengehäuse 45 und dem Spulenkörper 22 her.

Bei der Montage des Einbauventils ist aus Gründen der Variantenminimierung noch nicht endgültig festgelegt, welche Position der Stecker 39 bezüglich den Befestigungsaugen 49 einnimmt. Diese Position wird erst beim Kunden gemäß dessen individuellen Vorgaben eingestellt. Dazu wird das Magnetgehäuse 23 vor dem endgültigen Einbau in den Ventilblock festgehalten, während mit der anderen Hand der axial vor dem Magnetgehäuse 23 befindliche Stecker 39 verdreht wird. Dabei werden über den Presssitz zwischen der Polscheibe 37 und der Führungsbüchse 25 unter Überwindung des leichten Reibschlusses zwischen dem Magnetgehäuse und dem Polkern und der Reibung zwischen dem Dichtring 42 und dem Spulengehäuse 45 auch das Polrohr und die Ventilbuchse mitgenommen. Es ist denkbar, das Magnetgehäuse von Hand festzuhalten. Man kann jedoch auch die Ventilbuchse schon in die Einbaubohrung soweit einführen, dass die Dichtringe 13, 14 und 59 sich noch vor den Konus in der Einbaubohrung befinden, und die Schrauben zur Befestigung des Befestigungsflansches entsprechend weit eindrehen. Dreht man nun am Stecker 39, so wird das Magnetgehäuse 23 durch die Schrauben gehalten. Zieht man anschließend die Schrauben fest, kommen der Dichtring 59 zur festen Anlage am Konus 73, der Dichtring 13 zur festen Anlage am Abschnitt 76 und der Dichtring 14 zur festen Anlage am Abschnitt 74 der Einbaubohrung und werden dabei verspannt. Ein Verdrehen des Spulenkörpers mitsamt Polrohr und Ventilbuchse ist nun nicht mehr möglich.

Durch die Zurücksetzung der Befestigungsaugen ist gewährleistet, dass der Befestigungsflansch am Rand der Einbaubohrung auf der Montagefläche des Ventilblocks anliegt. Dort ist somit kein Spalt vorhanden, in den der Dichtring 59 einwandern könnte. Dies würde zu seiner Zerstörung führen.

### Bezugszeichenliste

- 10: Ventilbuchse
- 11: Dichtbund
- 12: Dichtbund
- 13: Dichtring
- 14: Dichtring
- 15: Radialbohrungen
- 16: Siebfilter
- 17: Siebfilter
- 20: Proportionalelektromagnet
- 21: Polrohr
- 22: Spulenkörper
- 23: Magnetgehäuse
- 24: Polkern
- 25: Führungsbüchse
- 26: Eindrehung in 25
- 27: Dichtbund
- 28: Dichtring
- 29: Sicken
- 35: Wicklung
- 36: Wicklungsträger
- 37: Polscheibe
- 38: elektrische Steckkontakte
- 39: Stecker
- 40: Mittelachse
- 41: Ringnut
- 42: Dichtring
- 45: Spulengehäuse
- 46: Befestigungsflansch
- 47: Schweißpunkte
- 48: Lötnaht
- 49: Befestigungsaugen an 46
- 50: Anlagefläche an 46
- 55: zentrale Öffnung in 45
- 56: zentrale Öffnung in 46
- 57: kreiszylindrischer Abschnitt an 24
- 58: kreiszylindrischer Abschnitt an 24
- 59: Dichtring auf 58
- 60: kreiszylindrischen Abschnitt von 24
- 70: Ventilblock
- 71: Einbaubohrung
- 72: Montagefläche von 70
- 73: Konus in 71
- 74: kreiszylindrischer Abschnitt von 71
- 75: kreiszylindrischer Abschnitt von 71
- 76: kreiszylindrischer Abschnitt von 71

- P: Druckanschluss
- A: Regelanschluss
- T: Tankanschluss

## Patentansprüche

1. Elektromagnetisch betätigbares hydraulisches Einbauventil mit einer ein Ventilgehäuse bildenden Einbaubuchse (10), die in eine Einbaubohrung (71) eines Ventilblocks (70) einbaubar ist, und mit einem mit der Einbaubuchse (10) eine Einheit bildenden Elektromagneten (20), der aufweist ein Magnetgehäuse (23) mit einem Spulengehäuse (45) und mit einem Befestigungsflansch (46), an dem mindestens ein Befestigungsauge (49) ausgebildet ist, ein Polrohr (21) und einen in einen Freiraum zwischen dem Polrohr (21) und dem Spulengehäuse (45) eingesetzten Spulenkörper (22), der eine Wicklung (35) und eine sich radial zwischen dem Polrohr (21) und dem Spulengehäuse (45) erstreckende Polscheibe (37) umfasst, wobei die Wicklung (35) und die Polscheibe (37) unter zusätzlicher Ausbildung eines außerhalb des Magnetgehäuses (23) liegenden Steckteils (39) mit elektrischen Anschlüssen (38) zusammen mit Kunststoff umspritzt sind,
wobei der Befestigungsflansch (46) durch einen Reibschluss am Polrohr (21) gehalten ist, dass der Spulenkörper (22) auf das Polrohr (21) aufgepresst ist und dass nach vollständigem Zusammenbau aller Teile des Elektromagneten (20) einerseits der Spulenkörper (22) zusammen mit dem Polrohr (21) und andererseits der Befestigungsflansch (46) relativ zueinander verdrehbar sind,
wobei zwischen der Polscheibe (37) und dem Spulengehäuse (45) eine Spielpassung vorhanden ist derart, dass der Außendurchmesser der Polscheibe (37) höchstens gleich dem der Innendurchmesser des Spulengehäuses (45) ist,
**dadurch gekennzeichnet, dass** das Spulengehäuse (45) und der Befestigungsflansch (46) als ursprünglich zwei Teile fest miteinander verbunden sind; und
dass der Reibschluss, mit dem der Befestigungsflansch (46) am Polrohr (21) gehalten ist, so gestaltet ist, dass durch ihn eine einmal eingestellte Winkellage sicher beibehalten wird, er aber durch Aufbringen eines Drehmoments noch durch Handkraft überwunden werden kann.

2. Elektromagnetisch betätigtes hydraulisches Einbauventil nach Patentanspruch 1, wobei zwischen dem Spulenkörper (22) und dem Spulengehäuse (45) ein Dichtring (42) angeordnet ist.

3. Elektromagnetisch betätigtes hydraulisches Einbauventil nach Patentanspruch 1 oder 2, wobei das Spulengehäuse (45) und der Befestigungsflansch (46) jeweils einen kreisrunden zentralen Durchbruch (55, 56) haben, durch den das Polrohr (21) hindurchtritt, wobei die beiden zentralen Durchbrüche (55, 56) den gleichen Durchmesser haben und wobei das Spulengehäuse (45) und der Befestigungsflansch (46) mit ihren zentralen Durchbrüchen (55, 56) auf einen kreiszylindrischen Abschnitt (57) des Polrohrs (21) aufgeschoben sind.

4. Elektromagnetisch betätigtes hydraulisches Einbauventil nach einem der Patentansprüche 1 bis 3, wobei durch den Sitz der Einheit aus Spulengehäuse (45) und Befestigungsflansch (46) auf dem Polrohr (21) das Spulengehäuse (45) derart zum Polrohr (21) ausgerichtet ist, dass zwischen ihm und der auf das Polrohr (21) aufgepressten Polscheibe (37) rundum ein Spiel besteht.

5. Elektromagnetisch betätigtes hydraulisches Einbauventil nach Patentanspruch 4, wobei das Polrohr (21) zweistückig einen Polkern (24), an dem die Einbaubuchse (10) befestigt ist, und ein mit dem Polkern (24) verbundenes rohr-oder becherförmiges Teil (25) aufweist, auf den die Polscheibe (37) aufgepresst ist, wobei die Einheit aus Spulengehäuse (45) und Befestigungsflansch (46) auf dem Polkern (24) sitzt und wobei die Einheit aus Spulengehäuse (45) und Befestigungsflansch (46) und das rohr- oder becherförmige Teil (25) des Polrohrs (21) derart durch den Polkern (24) zentriert sind, dass zwischen der Polscheibe (37) und dem Spulengehäuse (45) rundum ein Spiel besteht.

6. Elektromagnetisch betätigtes hydraulisches Einbauventil nach einem der Patentansprüche 1 bis 5, wobei das Spulengehäuse (45) und der Befestigungsflansch (46) stoffschlüssig fest miteinander verbunden sind.

7. Elektromagnetisch betätigtes hydraulisches Einbauventil nach Patentanspruch 6, wobei das Spulengehäuse (45) und der Befestigungsflansch (46) durch umlaufende ringförmige Stoffschlussnaht (48) mit einander verbunden sind.

8. Elektromagnetisch betätigtes hydraulisches Einbauventil nach Patentanspruch 6 oder 7, wobei das Spulengehäuse (45) und der Befestigungsflansch (46) durch eine Lötnaht (48) miteinander verbunden sind.

9. Elektromagnetisch betätigtes hydraulisches Einbauventil nach einem vorhergehenden Patentanspruch, wobei der Befestigungsflansch (46) zumindest zwei radial vorspringende Befestigungsaugen (49) und eine vom Spulengehäuse (45) abgewandte Anlagefläche (50) hat, die im Bereich der Befestigungsaugen (49) gegenüber einem zentralen Bereich des Befestigungsflansches (46), insbesondere mit dem Abstand zur Mittelachse des Magnetgehäuses zunehmend, zurückgesetzt ist.

## Claims

1. Electromagnetically actuable hydraulic built-in valve having a built-in socket (10) which forms a valve housing and can be built into a built-in bore (71) in a valve block (70), and having an electromagnet (20) which forms a unit with the built-in socket (10) and has a magnet housing (23) with a coil housing (45) and with a fastening flange (46), on which at least one fastening eye (49) is formed, a pole tube (21) and a coil body (22), which is inserted into a clearance between the pole tube (21) and the coil housing (45) and comprises a winding (35) and a pole disc (37) extending radially between the pole tube (21) and the coil housing (45), wherein the winding (35) and the pole disc (37) are together insert-moulded with plastic with a plug-in part (39) lying outside the magnet housing (23) and having electric terminals (38) additionally being formed, wherein the fastening flange (46) is held
on the pole tube (21) by a frictional connection, the coil body (22) is pressed onto the pole tube (21) and, after all of the parts of the electromagnet (20) are fully assembled, the coil body (22) together with the pole tube (21), on the one hand, and the fastening flange (46), on the other hand, are rotatable relative to each other,
wherein
there is a clearance fit between the pole disc (37) and the coil housing (45) in such a manner that the external diameter of the pole disc (37) is at most equal to that of the inside diameter of the coil housing (45),
**characterized in that** the coil housing
(45) and the fastening flange (46), as originally two parts, are fixedly connected to each other; and
**in that** the frictional connection with which the fastening flange (46) is held on the pole tube (21) is configured in such a manner that an angular position once set is securely maintained by it but it can still be overcome by manual force, by application of a torque.

2. Electromagnetically actuable hydraulic built-in valve according to Claim 1, wherein a sealing ring (42) is arranged between the coil body (22) and the coil housing (45).

3. Electromagnetically actuable hydraulic built-in valve according to Claim 1 or 2, wherein the coil housing (45) and the fastening flange (46) each have a circular central aperture (55, 56) through which the pole tube (21) passes, wherein the two central apertures (55, 56) have the same diameter, and wherein the coil housing (45) and the fastening flange (46) are pushed with their central apertures (55, 56) onto a circular-cylindrical portion (57) of the pole tube (21).

4. Electromagnetically actuable hydraulic built-in valve according to one of Claims 1 to 3, wherein fitting of the unit consisting of the coil housing (45) and fastening flange (46) on the pole tube (21) aligns the coil housing (45) with respect to the pole tube (21) in such a manner that there is a clearance all around between the coil housing and the pole disc (37) pressed onto the pole tube (21).

5. Electromagnetically actuable hydraulic built-in valve according to Claim 4, wherein the pole tube (21) is formed in two parts with a pole core (24), to which the built-in socket (10) is fastened, and a tubular or cup-shaped part (25) which is connected to the pole core (24) and onto which the pole disc (37) is pressed, wherein the unit consisting of the coil housing (45) and fastening flange (46) sits on the pole core (24), and wherein the unit consisting of the coil housing (45) and fastening flange (46) and the tubular or cup-shaped part (25) of the pole tube (21) are centred by the pole core (24) in such a manner that there is a clearance all around between the pole disc (37) and the coil housing (45).

6. Electromagnetically actuable hydraulic built-in valve according to one of Claims 1 to 5, wherein the coil housing (45) and the fastening flange (46) are fixedly connected to each other in an integrally bonded manner.

7. Electromagnetically actuable hydraulic built-in valve according to Claim 6, wherein the coil housing (45) and the fastening flange (46) are connected to each other by a peripheral annular integrally bonded seam (48).

8. Electromagnetically actuable hydraulic built-in valve according to Claim 6 or 7, wherein the coil housing (45) and the fastening flange (46) are connected to each other by a soldered seam (48).

9. Electromagnetically actuable hydraulic built-in valve according to a preceding claim, wherein the fastening flange (46) has at least two radially projecting fastening eyes (49) and a contact surface (50) which faces away from the coil housing (45) and, in the region of the fastening eyes (49), is set back in relation to a central region of the fastening flange (46), in particular with the distance from the central axis of the magnet housing increasing.

## Revendications

1. Soupape hydraulique intégrée à commande électromagnétique avec une douille intégrée (10) formant un boîtier de soupape, qui peut être montée dans un alésage d'encastrement (71) d'un bloc (70) à soupapes, et avec un électroaimant (20) formant une unité avec la douille intégrée (10), qui présente un boîtier d'aimant (23) avec un boîtier de bobine (45) et avec une bride de fixation (46), sur laquelle est formé au moins un œillet de fixation (49), un tube polaire (21) et un corps de bobine (22) insérés dans un espace libre entre le tube polaire (21) et le boîtier de bobine (45), qui comprend un enroulement (35) et un disque polaire (37) s'étendant radialement entre le tube polaire (21) et le boîtier de bobine (45), l'enroulement (35) et le disque polaire (37) étant encapsulés dans de la matière plastique en formant en plus une partie enfichable (39) située à l'extérieur du boîtier d'aimant (23) et comportant des connexions électriques (38), la bride de fixation (46)
étant maintenue par friction sur le tube polaire (21), en ce que le corps de bobine (22) est pressé sur le tube polaire (21) et en ce qu'après l'assemblage complet de toutes les pièces de l'électroaimant (20), d'une part le corps de bobine (22) avec le tube polaire (21) et d'autre part la bride de fixation (46) sont aptes à tourner l'un par rapport à l'autre,
dans lequel
il existe un ajustement avec jeu entre le disque polaire (37) et le boîtier de bobine (45) de telle sorte que le diamètre extérieur du disque polaire (37) soit au plus égal au diamètre intérieur du boîtier de bobine (45),
**caractérisée en ce que** le boîtier de bobine
(45) et la bride de fixation (46) sont reliés de manière fixe l'un à l'autre comme étant initialement deux parties ; et
**en ce que** la liaison par friction par laquelle la bride de fixation (46) est maintenue sur le tube polaire (21) est conçue de telle sorte qu'une position angulaire, une fois réglée, soit conservée de manière sûre, mais qu'elle puisse être surmontée par l'application d'un couple de rotation ou par une force manuelle.

2. Soupape hydraulique intégrée à commande électromagnétique selon la revendication 1, dans laquelle une bague d'étanchéité (42) est agencée entre le corps de bobine (22) et le boîtier de bobine (45).

3. Soupape hydraulique intégrée à commande électromagnétique selon la revendication 1 ou 2, dans laquelle le boîtier de bobine (45) et la bride de fixation (46) ont chacun un passage central circulaire (55, 56) à travers lequel passe le tube polaire (21), les deux passages centraux (55, 56) ayant le même diamètre et le boîtier de bobine (45) et la bride de fixation (46) étant enfilés avec leurs passages centraux (55, 56) sur une section cylindrique circulaire (57) du tube polaire (21).

4. Soupape hydraulique intégrée à commande électromagnétique selon l'une des revendications 1 à 3, dans laquelle, du fait de l'assise de l'unité composée du boîtier de bobine (45) et de la bride de fixation (46) sur le tube polaire (21), le boîtier de bobine (45) est orienté par rapport au tube polaire (21) de telle sorte qu'il existe un jeu sur tout le pourtour entre celui-ci et le disque polaire (37) pressé sur le tube polaire (21) .

5. Soupape hydraulique intégrée à commande électromagnétique selon la revendication 4, dans laquelle le tube polaire (21) présente un noyau polaire (24) en deux parties sur lequel est fixée la douille intégrée (10), et une pièce (25) en forme de tube ou de godet reliée au noyau polaire (24), sur laquelle est pressée le disque polaire (37), l'unité composée du boîtier de bobine (45) et de la bride de fixation (46) étant placée sur le noyau polaire (24) et l'unité composée du boîtier de bobine (45) et de la bride de fixation (46) et la partie en forme de tube ou de godet (25) du tube polaire (21) étant centrées par le noyau polaire (24) de telle sorte qu'il existe un jeu tout autour entre le disque polaire (37) et le boîtier de bobine (45).

6. Soupape hydraulique intégrée à commande électromagnétique selon l'une des revendications 1 à 5, dans laquelle le boîtier de bobine (45) et la bride de fixation (46) sont reliés solidement entre eux par une liaison de matière.

7. Soupape hydraulique intégrée à commande électromagnétique selon la revendication 6, dans laquelle le boîtier de bobine (45) et la bride de fixation (46) sont reliés l'un à l'autre par un joint d'étanchéité annulaire périphérique (48).

8. Soupape hydraulique intégrée à commande électromagnétique selon la revendication 6 ou 7, dans laquelle le boîtier de bobine (45) et la bride de fixation (46) sont reliés l'un à l'autre par un cordon de soudure (48) .

9. Soupape hydraulique intégrée à commande électromagnétique selon une revendication précédente, la bride de fixation (46) ayant au moins deux œillets de fixation (49) en saillie radiale et une surface de contact (50) opposée au boîtier de bobine (45) qui, dans la zone des œillets de fixation (49), est en retrait par rapport à une zone centrale de la bride de fixation (46), en particulier en augmentant avec la distance par rapport à l'axe central du boîtier d'aimant.
